# EUROPEAN PATENT SPECIFICATION

(11) **EP 2 745 667 B1**
(45) Date of publication and mention of the grant of the patent: **09.03.2016**
(21) Application number: 13196857.0
(22) Date of filing: 12.12.2013
(51) Int. Cl.: A01C 21/00, A01G 25/02

(54) **Sub-irrigation method for crops sown in rows**
Methode für unterirdische Bewässerung von in Reihen gesäten Pflanzen
Méthode d'irrigation sous-terraine pour les cultures semées en lignes

(30) Priority: 20.12.2012 IT CR20120025
(43) Date of publication of application: 25.06.2014
(73) Proprietor: Underdrip SRL, 26030 Malagnino (CR) (IT)
(72) Inventor: Rossi, Giuseppe Giorgo, 26030 MALAGNINO (CR) (IT)
(74) Representative: Marcio', Paola

(56) References cited:
- EP-A2- 1 324 166
- DE-A1-102007 040 511
- JP-A- 10 066 462
- US-A- 5 919 242
- US-B1- 6 199 000

## Description

The present invention concerns the agricultural sector.

In particular, the invention concerns a sub-irrigation method for crops sown in rows.

The expression irrigation method indicates the way in which the irrigation water is administered to the crops.

In Italy the most widespread irrigation methods are surface irrigation and overhead irrigation.

With the surface irrigation method, the water runs over the surface of the land to be irrigated in the form of a thin uniform film for the entire duration of the watering until reaching the desired degree of saturation of the ground.

With the overhead irrigation method, also called sprinkler method, the water is distributed in the form of small drops delivered under pressure by irrigation nozzles or irrigation booms.

Both the above-mentioned irrigation methods involve drawbacks.

The surface system is not suitable for clay soils due to obvious problems of poor permeability and, more generally, irrigation efficiency is very low due to water percolation and evaporation. Consequently large volumes of water are required. The water in continuous movement can also cause problems of erosion and washing away of the soil, thus incurring costs for maintenance of the irrigation and drainage channels.

The effectiveness of overhead irrigation depends largely on the weather conditions at the time of irrigation: if it is windy, the distribution tends to be non-uniform, with consequent wastage of water. Furthermore an excessively fine spray causes heavy losses due to evaporation. In addition, overhead irrigation involves high plant costs and the water distribution booms occupy considerable space on the surface of the field.

A more advantageous method of irrigation is undoubtedly sub-irrigation, in which the water is distributed to the plants by means of underground pipes. In this type of irrigation, the water circulates under pressure in the pipes, flows out through apertures provided for the purpose and moves up through the soil by infiltration and capillarity, reaching the plant roots from below.

JP 10 066 462 A discloses a sub-irrigation method which comprises a pipe made out of porous material, embedded in plant culturing soil beneath the roots of the plants, fed with water supplied from a tank, arranged on the soil. The water flows from the tank to the pipes and permeates through the porous wall of said pipes. The aim is to maintain the suitable degree of humidity of the soil.

In this way, both the surface of the ground and the foliage are kept dry, reducing the proliferation of fungal diseases and the germination of weeds.

The smallest soil particles are not washed away, thus reducing soil impoverishment or compaction and promoting in-depth growth and development of the root system.

Furthermore, the wastage of water due to evaporation, mist, surface run-off or drift typical of the traditional irrigation methods is completely eliminated.

Nevertheless, also traditional sub-irrigation entails certain drawbacks, caused mainly by the random distribution of the pipes in the ground with respect to the position of the subsequent rows of seed.

The arrangement of the perforated pipes below the agricultural ground for underground water distribution is completely unrelated to subsequent sowing of the seeds and therefore, to effectively reach the root systems of all the plants, water must be distributed until the field capacity of the ground is reached.

Reaching full field capacity of the ground means pumping much more water than what is actually required for irrigation of the plant root system only.

The wastage of water, and electricity for pumping it, results in significant costs.

Once full field capacity has been reached, disadvantageously, any additional drop of water, for example any rainwater, is not able to drain and penetrate into the ground, but remains on the surface, stagnating or running off.

Furthermore, if the water pumped into the pipes has been enriched with fertiliser or nutrients, they must be added in quantities superior to the minimum requirement because they are partly dispersed, disadvantageously reaching the aquifer and thus increasing contamination of the environment.

The object of the present invention is to eliminate the above-mentioned defects.

In particular the object of the invention is to define a sub-irrigation method that guarantees optimal management of crop irrigation, in which all the plants receive the same quantity of water and fertiliser, if the latter are diluted in the irrigation flow.

A further object of the invention is to define a sub-irrigation method that maintains the drainage capacity of the soil vis-à-vis the rainwater, does not waste water, reduces labour and energy costs, does not require ploughing of the land before sowing or removal of the previous crop stubbles.

The objects are achieved by a sub-irrigation method for crops sown in rows, comprising the steps of:
- laying below the agricultural soil, parallel to one another and at a regular pitch, a plurality of perforated pipes for the underground distribution of water;
- sowing seeds in parallel rows in said agricultural soil;
- feeding water into said perforated pipes;
characterized in that said step of laying, below the agricultural soil, a plurality of perforated pipes parallel to one another and at a regular pitch for the underground distribution of water, comprises the step of storing the position of said perforated pipes and in that said step of sowing the seeds in parallel rows comprises the prior step of identifying the position of said pipes and the subsequent step of sowing the seeds over said pipes, maintaining the same regular pitch, so that the water distributed by sub-irrigation reaches the roots of plants that have grown from said seeds without totally saturating the agricultural soil between said pipes.

According to a preferred embodiment of the invention, the steps of storage and identification of the position of the pipes use GPS technology.

According to a first aspect of the invention, the seeds are sown maintaining the same regular pitch as the pipes, but with rows offset by a short distance to the right or left of said pipes.

Advantageously, said distance is increased at each new sowing operation, and is between 2 and 5 cm.

Said pitch is between 45 and 100 cm.

According to possible embodiments of the invention, said pitch is approximately 70 cm or, alternatively, said pitch is approximately 75 cm.

According to a preferred embodiment of the invention, said method comprises the step of sowing plants with taproots in the ground space between said pipes.

The sub-irrigation method according to the present invention offers numerous advantages:
- all the plants are correctly irrigated, without ever reaching the ground saturation point;
- the water is distributed directly to the root system, promoting uniform, balanced and symmetrical plant growth;
- since the sub-irrigation is already positioned along the sowing rows, the quantity of water necessary is considerably reduced;
- the use of less water also means less waste and fewer salts dissolved in the ground and in the aquifer;
- the fertilisers and nutrients carried with the water also directly reach the plant root systems, thus reducing the quantities of chemicals used and minimising environmental pollution;
- the water delivered by the pipes is directly sucked upwards by the plant roots;
- between the sowing rows, the soil is not completely soaked with water and maintains its porosity, thus guaranteeing drainage of any rainwater;
- between the sowing rows, plants with taproots can be grown which keep the soil "open" over time and further assist drainage.

The advantages of the invention will become clearer below, where a preferred embodiment is described by way of non-limiting example, and with the help of the figures wherein:
Figures 1a, 1b and 1c show, in a schematic cross section, the main steps of the sub-irrigation method for crops sown in rows according to the invention;
Figures 2 and 3 show, in a schematic cross section, the sub-irrigation method in two possible steps of the invention;
Figure 4 shows, in a partially transparent top view, soil sown and irrigated with the sub-irrigation method according to the invention.

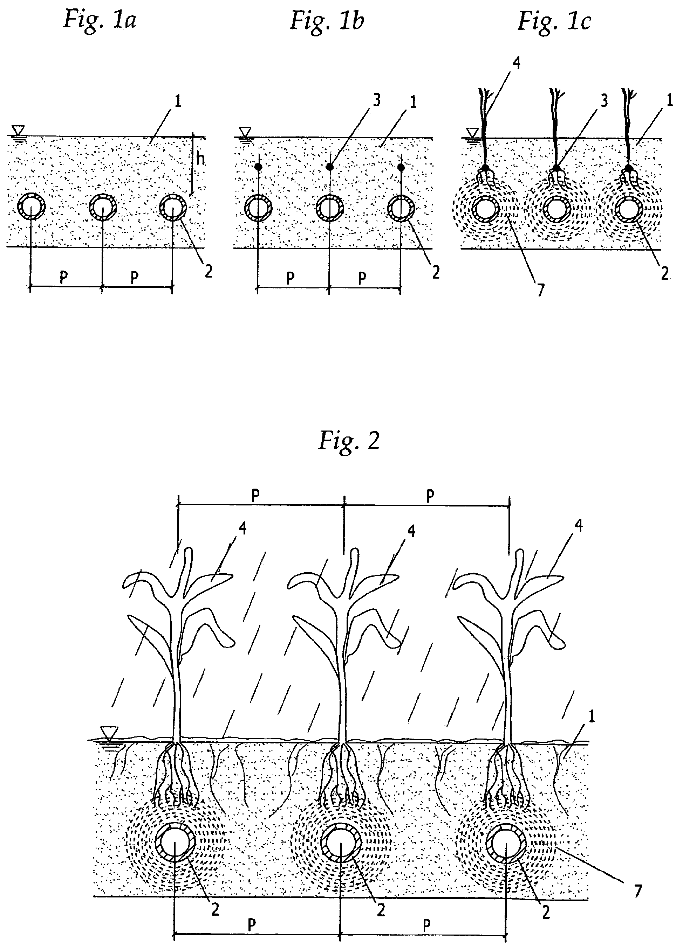

With reference to Figures 1a, 1b, 1c, a sub-irrigation method is illustrated for crops sown in rows in its main steps.

The first step comprises laying, below the agricultural soil 1, by means of a ripper according to the known technique, at a certain depth h from ground level, a series of perforated pipes 2 for underground distribution of water (Fig. 1a), keeping and storing the information relative to their position.

Said pipes 2 are connected to a main manifold 6 for delivery of the water and are arranged parallel to one another, spaced at a regular pitch P.

Once the seed bed has been prepared, the invention comprises the step of identifying the position of said pipes 2 and subsequent sowing of the seeds 3 over the pipes, maintaining the same regular pitch P (Fig. 1 b) also for the seeds 3.

The pipes 2 concealed underground can be identified by localisation systems of known type, for example by signals fixed on the ground or by the use of a satellite guide that uses GPS technology. During positioning of the pipes 2, their layout is stored, then used by the seed drills as the pattern for sowing the seeds 3.

For crops which are normally sown in rows, the pitch P at which the pipes 2 are laid, and therefore the pitch P at which the rows of seeds 3 are spaced, can be between 45 and 100 cm.

By way of example only, in the province of Cremona maize is sown in rows at a regular pitch of 70 cm and consequently, according to the present invention, also the pipes 2 for distribution of the water will be spaced beforehand at 70 cm from one another.

A further example is the province of Mantua, where maize is grown in rows 75 cm from one another, and the regular pitch of the pipes 2 will therefore be 75 cm.

Once the seeds 3 have been sown, the plants 4 are left to grow, irrigating them constantly by feeding water into said perforated pipes 2.

The water pumped into the pipes 2 comes out of the holes provided, spreading through the ground 1 by capillarity, but within a limited area 7 (Fig. 1 c), and is taken in by osmosis, together with the nutrients, by the roots of the plants 4.

The water distributed by sub-irrigation according to the invention quickly reaches the roots of the plants 4 without totally saturating the surrounding agricultural soil 1, as illustrated in Fig. 2, which thus maintains its porosity and continues to easily drain the rainwater.

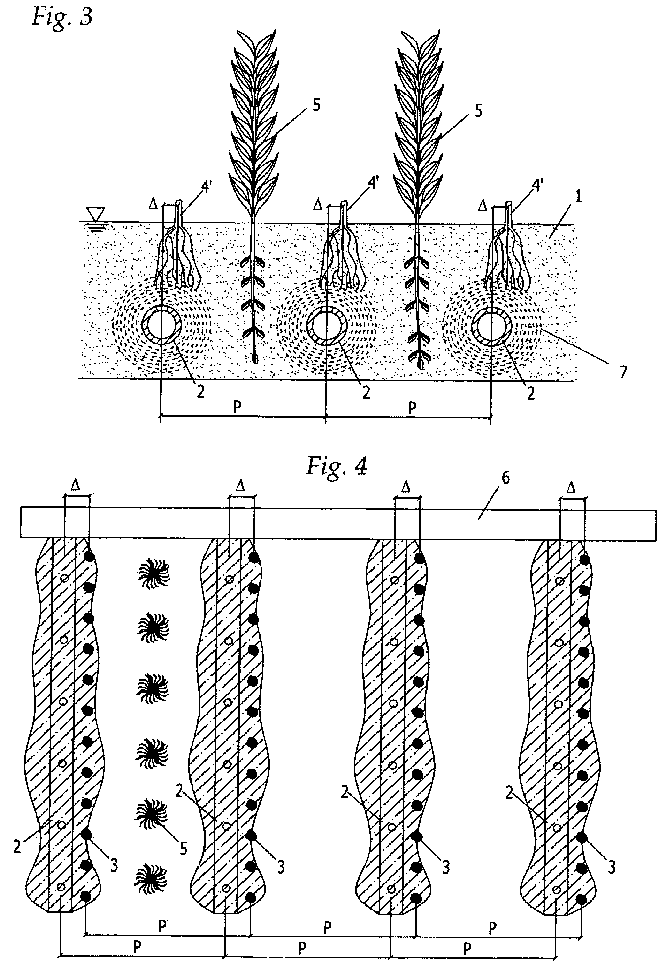

With particular reference to Fig. 3, plants with taproots 5 can be sown, at time intervals of a few years, between the pipes 2 where the soil 1 remains dry and is never sown in rows.

Said roots 5, decomposing after the relative plants have been cut, keep the soil 1 "open", creating further macro drainage channels for the rainwater.

The taproot crop is therefore advantageous for the environment, increasing the natural drainage capacity of the ground.

Fig. 3 and 4 illustrate a possible embodiment of the method according to the invention: once the pipes 2 under the soil 1 have been identified, the rows of seeds 3 can be sown offset with respect to the axis of the pipes 2 by a small distance Δ.

The rows of seeds 3 always maintain the same regular pitch P as the pipes 2, but in this way are shifted, to the right or left, with respect to them.

Said embodiment is very advantageous for successive no-tillage sowing: the pipes 2 remain in their position, the new seeds 3 are sown offset from the position of the old seeds, without the need to plough the land or remove the previous crop stubbles 4'.

At each subsequent sowing operation, said offset distance Δ can be increased, always ensuring that the seeds sown remain within the irrigation radius of the pipes 2, and therefore within the area of ground irrigated 7. Optimal results have been obtained using a minimum distance Δ, only a few centimetres, in order not to risk saturating the ground between two rows of pipes 2.

For example, the first year the seeds are sown over the pipes 2, the second year sowing is shifted 2-3 cm to the right, to avoid the remains of the stubble 4' of the maize sown the previous year, the third year sowing is shifted to the left by the same distance, without ever breaking up the ground (no-tillage sowing). Subsequently, in the fourth year, the seed will again be sown over the pipes 2.

Even more advantageously, said no-tillage sowing method is suited to implement a system for protection of the environment if combined with the sowing of plants 5 with taproot systems. Since said roots are not disturbed by tilling or subsequent sowing operations, when it rains they can perform, over time, efficient drainage of the ground and replenishment of the aquifers.

Alternatively to offset sowing, minimum tillage of the ground 1 can be performed so that the seed can be sown over the pipes 2.

## Claims

1. Sub-irrigation method for crops sown in rows, comprising the steps of:
- laying, below agricultural soil (1), parallel to one another and at a regular pitch (P), a plurality of perforated pipes (2) for the underground distribution of water;
- sowing seeds (3) in parallel rows in said agricultural soil (1);
- feeding water into said perforated pipes (2);
**characterized in that** said step of laying, below agricultural soil (1) a plurality of perforated pipes (2) parallel to one another and at a regular pitch (P) for the underground distribution of water, comprises the step of storing the position of said perforated pipes (2) and **in that** said step of sowing the seeds (3) in parallel rows comprises the prior step of identifying the position of said pipes (2) and the subsequent step of sowing the seeds (3) over said pipes, maintaining the same regular pitch (P), so that the water distributed by sub-irrigation reaches the roots of plants (4) that have grown from said seeds (3) without totally saturating the agricultural soil (1) between said pipes (2).

2. Sub-irrigation method according to claim 1, **characterized in that** the steps of storage and identification of the position of the pipes (2) use GPS technology.

3. Sub-irrigation method according to claim 1, **characterized in that** the seeds (3) are sown maintaining the same regular pitch (P) as the pipes (2), but with rows offset to the right or left with respect to said pipes (2) by a distance (Δ).

4. Sub-irrigation method according to claim 3, **characterized in that** said distance (Δ) is increased at each new sowing operation.

5. Sub-irrigation method according to claim 3, **characterized in that** said distance (Δ) is between 2 and 5 cm.

6. Sub-irrigation method according to claim 1, **characterized in that** said pitch (P) is between 45 and 100 cm.

7. Sub-irrigation method according to claim 6, **characterized in that** said pitch (P) is approximately 70 cm.

8. Sub-irrigation method according to claim 6, **characterized in that** said pitch (P) is approximately 75 cm.

9. Sub-irrigation method according to claim 1, **characterized in that** it comprises the step of sowing plants with taproots (5) in the ground space between said pipes (2).

## Patentansprüche

1. Unteiflurbewässerungsmethode für in Reihen gesäte Kulturen, die Schritte umfassend:
- das Legen, unter landwirtschaftlichem Boden (1), parallel zueinander und in einem regelmäßigen Abstand (P), einer Vielzahl perforierter Rohre (2) zur unterirdischen Verteilung von Wasser;
- das Säen von Samen (3) in parallelen Reihen in besagtem landwirtschaftlichem Boden (1);
- die Zufuhr von Wasser in besagte perforierte Rohre (2);
**gekennzeichnet dadurch, dass** besagter Schritt des Legens unter landwirtschaftlichem Boden (1) einer Vielzahl perforierter Rohre (2) parallel zueinander und in einem regelmäßigen Abstand (P) zur unterirdischen Verteilung des Wassers den Schritt der Speicherung der Position besagter perforierter Rohre (2) umfasst, und dadurch, dass besagter Schritt des Säens der Samen (3) in parallelen Reihen den vorhergehenden Schritt der Identifizierung der Position besagter Rohre (2) und den nachfolgenden Schritt des Säens der Samen (3) über besagten Rohren umfasst, wobei der gleiche regelmäßige Abstand (P) beibehalten wird, so dass das durch Unterflurbewässerung verteilte Wasser die Wurzeln der Pflanzen (4), die aus besagten Samen (3) gewachsen sind, erreicht, ohne den landwirtschaftlichen Boden (1) zwischen besagten Rohren (2) vollkommen zu sättigen.

2. Untelflurbewässerungsmethode gemäß Anspruch 1, **gekennzeichnet dadurch, dass** die Schritte der Speicherung und der Identifizierung der Position der Rohre (2) die GPS-Technologie verwenden.

3. Untelflurbewässerungsmethode gemäß Anspruch 1, **gekennzeichnet dadurch, dass** die Samen (3) unter Beibehaltung des gleichen regelmäßigen Abstands (P) wie die Rohre (2) gesät werden, aber mit Reihen, die nach rechts oder links in Bezug auf besagte Rohre (2) um einen Abstand (Δ) versetzt sind.

4. Untelflurbewässerungsmethode gemäß Anspruch 3, **gekennzeichnet dadurch, dass** besagter Abstand (Δ) bei jeder neuen Aussaat vergrößert wird.

5. Untelflurbewässerungsmethode gemäß Anspruch 3, **gekennzeichnet dadurch, dass** besagter Abstand (Δ) zwischen 2 und 5 cm beträgt.

6. Untelflurbewässerungsmethode gemäß Anspruch 1, **gekennzeichnet dadurch, dass** besagter Abstand (P) zwischen 45 und 100 cm beträgt.

7. Untelflurbewässerungsmethode gemäß Anspruch 6, **gekennzeichnet dadurch, dass** besagter Abstand (P) ungefähr 70 cm beträgt.

8. Untelflurbewässerungsmethode gemäß Anspruch 6, **gekennzeichnet dadurch, dass** besagter Abstand (P) ungefähr 75 cm beträgt.

9. Unterflurbewässerungsmethode gemäß Anspruch 1, **gekennzeichnet dadurch, dass** sie den Schritt der Aussaat von Pflanzen mit Pfahlwurzeln (5) in den Boden zwischen besagten Rohren (2) umfasst.

## Revendications

1. Méthode d'irrigation souterraine pour les cultures semées en lignes, comprenant les étapes de:
- pose, sous le terrain agricole (1), d'une multitude de tuyaux perforés (2), parallèles les uns avec les autres et à un pas régulier (P), pour la distribution souterraine de l'eau;
- semis des graines (3) dans des lignes parallèles dans ledit terrain agricole (1);
- distribution de l'eau dans lesdits tuyaux perforés (2);
**caractérisée par le fait que** l'étape de pose, sous le terrain agricole (1) d'une multitude de tuyaux perforés (2) parallèles les uns avec les autres et à un pas régulier (P), pour la distribution souterraine de l'eau, comprend l'étape de mémorisation de la position desdits tuyaux perforés (2) et **par le fait que** ladite étape de semis des graines (3) dans des lignes parallèles comprend l'étape précédente d'identification de la position desdits tuyaux (2) et l'étape suivante de semis des graines (3) au-dessus desdits tuyaux, en maintenant le même pas régulier (P), de sorte que l'eau distribuée par irrigation souterraine parvienne aux racines des plantes (4) qui ont poussé à partir desdites graines (3) sans saturer totalement le terrain agricole (1) entre lesdits tuyaux (2).

2. Méthode d'irrigation souterraine selon la revendication 1, **caractérisée par le fait que** l'étape de mémorisation et l'identification de la position des tuyaux (2) utilise la technologie GPS.

3. Méthode d'imigation souterraine selon la revendication 1, **caractérisée par le fait que** les graines (3) sont semées en maintenant le même pas régulier (P) que les tuyaux (2), mais avec des lignes décalées à droite ou à gauche par rapport auxdits tuyaux (2) d'une distance (Δ).

4. Méthode d'irrigation souterraine selon la revendication 3, **caractérisée par le fait que** ladite distance (Δ) est augmentée à chaque nouvelle opération de semis.

5. Méthode d'irrigation souterraine selon la revendication 3, **caractérisée par le fait que** ladite distance (Δ) est comprise entre 2 et 5 cm.

6. Méthode d'irrigation souterraine selon la revendication 1, **caractérisée par le fait que** ledit pas (P) est compris entre 45 et 100 cm.

7. Méthode d'irrigation souterraine selon la revendication 6, **caractérisée par le fait que** ledit pas (P) est d'environ 70 cm.

8. Méthode d'irrigation souterraine selon la revendication 6, **caractérisée par le fait que** ledit pas (P) est d'environ 75 cm.

9. Méthode d'irrigation souterraine selon la revendication 1, **caractérisée par le fait qu'**elle comprend l'étape de semis de plantes avec racines pivotantes (5) dans l'espace du sol entre lesdits tuyaux (2).
